# EUROPEAN PATENT SPECIFICATION

(11) **EP 1 961 196 B1**
(45) Date of publication and mention of the grant of the patent: **12.10.2011**
(21) Application number: 06789055.8
(22) Date of filing: 28.07.2006
(51) Int. Cl.: H04M 1/2745

(54) **PHONEBOOK RATING SYSTEM FOR ELECTRONIC EQUIPMENT**
TELEFONBUCH-EINSTUFUNGSSYSTEM FÜR ELEKTRONISCHE GERÄTE
SYSTEME DE TARIFICATION D'UN REPERTOIRE TELEPHONIQUE POUR EQUIPEMENT ELECTRONIQUE

(30) Priority: 13.12.2005 US 301484
(43) Date of publication of application: 27.08.2008
(73) Proprietor: Sony Ericsson Mobile Communications AB, 221 88 Lund (SE)
(72) Inventor: MIDDLETON, David, D., SE-217 64 Malmö (SE)
(74) Representative: Aurell, Henrik
(86) International application number: PCT/US2006/029841
(87) International publication number: WO 2007/070111

(56) References cited:
- WO-A2-01/31895
- GB-A- 2 354 134
- US-A1- 2004 085 289
- US-B1- 6 606 381

## Description

### TECHNICAL FIELD OF THE INVENTION

The present invention relates to a method and apparatus for rating electronic phonebook entries (e.g., contacts) stored in electronic equipment, such electronic equipments and the like

### DESCRIPTION OF THE RELATED ART

Electronic equipment, such as, for example, communication devices, mobile phones, personal digital assistants, etc. typically include electronic phonebooks or electronic directories that allow the entry of a list of telephone numbers associated with a particular contact. The telephone numbers are generally entered by the user or received during the course of receiving a telephone call from another user. Generally, the telephone numbers are arranged in the electronic phonebook in the order they were manually entered or alphabetically based on the contact name associated with each number.

As time elapses, the number of entries in the electronic phonebook generally increases. As the number of entries increases, it becomes easier for the user of the electronic equipment to call those listed in the electronic phonebook without having to memorize or otherwise separately store the telephone numbers associated with each of the contacts. A disadvantage of having an electronic phonebook with a large number of entries organized in a conventional manner (e.g., based on order of entry, alphabetical by name, etc.) is that it becomes increasingly more time consuming and cumbersome for the user to efficiently find a particular individual contact listed in the electronic phonebook. This is especially true when a user frequently calls a particular contact and the contact is located near the bottom of the contact list displayed on the electronic equipment. In such cases, the user may scroll down the entire contact list to locate the desired contact. One of ordinary skill in the art will readily appreciate that these steps are time-consuming and inconvenient, especially for mobile phones, which may be used while the user is driving or performing other tasks.

Another disadvantage with conventional electronic phonebooks is that there is no mechanism provided to override a user selected feature selected based upon receiving a call from an individual contact rated in the electronic phonebook. For example, if the user manually sets the ringer of the telephone to silent because the user does not want to be interrupted in a particular instance, every call received by the electronic equipment will be answered in the silent mode. One of ordinary skill in the art will appreciate that in certain circumstances it may be desirable to allow a call from a particular individual contact or a class of contacts rated in the electronic phonebook to override the user selected feature. An example of a prior art electronic phonebook is disclosed in US 6,606, 381.

In view of the aforementioned shortcomings associated with conventional phonebooks, there is a strong need in the art for rating electronic phonebook entries associated with electronic equipment and overriding user selected features based upon a rating associated electronic phonebook entry.

### SUMMARY

One aspect of the present invention relates to an electronic equipment comprising: an electronic phonebook including a plurality of contacts having a plurality of entries including a contact rating field; a processor coupled to the electronic phonebook, wherein the processor calculates at least one contact rating for one more of the plurality of contacts; and a display coupled to the processor for displaying one or more of the contacts based upon the contact rating.

Another aspect of the present invention relates to an electronic equipment comprising: an electronic phonebook including a plurality of contacts having a plurality of entries including at least one user selected attribute that allows an associated call from one or more of the contacts to override a call processing function.

Another aspect of the present invention relates to an electronic equipment comprising: an electronic phonebook including a plurality of contacts having a plurality of entries including a cumulative time connected to one or more of contacts, a total number of calls connected to one or more of the contacts, wherein the electronic phonebook has at least one entry that corresponds to a user selected attribute; a processor coupled to the electronic phonebook, wherein the processor calculates a contact rating for one more of the plurality of contacts based at least in part on the cumulative time connected and the total number of calls connected to one or more of the plurality of contacts; and a display coupled to the processor for displaying one or more of the contacts based upon the contact rating.

Another aspect of the present invention relates to a method for displaying ranked entries in an electronic phonebook comprising: providing an electronic phonebook including a plurality of contacts having a plurality of entries including at least one entry that corresponds to a contact rating; displaying one or more of the contacts based upon the contact rating.

Another aspect of the present invention relates to a method for overriding a user selected feature in an electronic equipment comprising: providing electronic equipment having a ringer and at least one user feature selected; providing an electronic phonebook in the electronic equipment, wherein the electronic phonebook includes a plurality of contacts having a plurality of entries including an override entry having a corresponding override function associated therewith; receiving a call from a contact in the electronic phonebook; and overriding the user selected feature based at least in part on a rating associated with the contact.

Another aspect of the present invention relates to a computer program stored on a machine readable medium, the program being suitable for use in an electronic equipment as an electronic phonebook including a plurality of contacts having a plurality of entries including a cumulative time connected to one or more of contacts and a total number of calls connected to one or more of the contacts, wherein: when the program is loaded in memory in the electronic equipment and executed causes the electronic equipment to calculate a contact rating for one more of the plurality of contacts based at least in part on the cumulative time connected and the total number of calls connected to one or more of the plurality of contacts.

Other systems, devices, methods, features, and advantages of the present invention will be or become apparent to one having ordinary skill in the art upon examination of the following drawings and detailed description. It is intended that all such additional systems, methods, features, and advantages be included within this description, be within the scope of the present invention, and be protected by the accompanying claims.

It should be emphasized that the term "comprise/comprising" when used in this specification is taken to specify the presence of stated features, integers, steps or components but does not preclude the presence or addition of one or more other features, integers, steps, components or groups thereof."

The term "electronic equipment" includes portable radio communication equipment. The term "portable radio communication equipment", which herein after is referred to as a mobile radio terminal, includes all equipment such as mobile telephones, pagers, communicators, i.e., electronic organizers, personal digital assistants (PDA's), portable communication apparatus, smart phones or the like.

### BRIEF DESCRIPTION OF THE DRAWINGS

The foregoing and other embodiments of the invention are hereinafter discussed with reference to the drawings. The components in the drawings are not necessarily to scale, emphasis instead being placed upon clearly illustrating the principles of the present invention. Likewise, elements and features depicted in one drawing may be combined with elements and features depicted in additional drawings. Moreover, in the drawings, like reference numerals designate corresponding parts throughout the several views.
Figures 1 and 2 are exemplary schematic diagrams illustrating electronic equipment in accordance with aspects of the present invention.
Figures 3 and 4 are tables of conventional electronic phonebook entries.
Figure 5 is an exemplary table illustrating electronic phonebook entry records in accordance with aspects of the present invention.
Figure 6 is an exemplary table illustrating electronic phonebook entry records in accordance with aspects of the present invention.
Figure 7 is a flow chart illustrating adding additional contacts to the electronic phonebook in accordance with aspects of the present invention.
Figure 8 is a flow chart illustrating steps to select the manner in which entries are displayed in accordance with aspects of the present invention.
Figure 9 is a flow chart illustrating call counting steps and timing steps in accordance with aspects of the present invention.
Figure 10 is a flow chart illustrating an override function in accordance with aspects of the present invention.

### DETAILED DESCRIPTION OF EMBODIMENTS

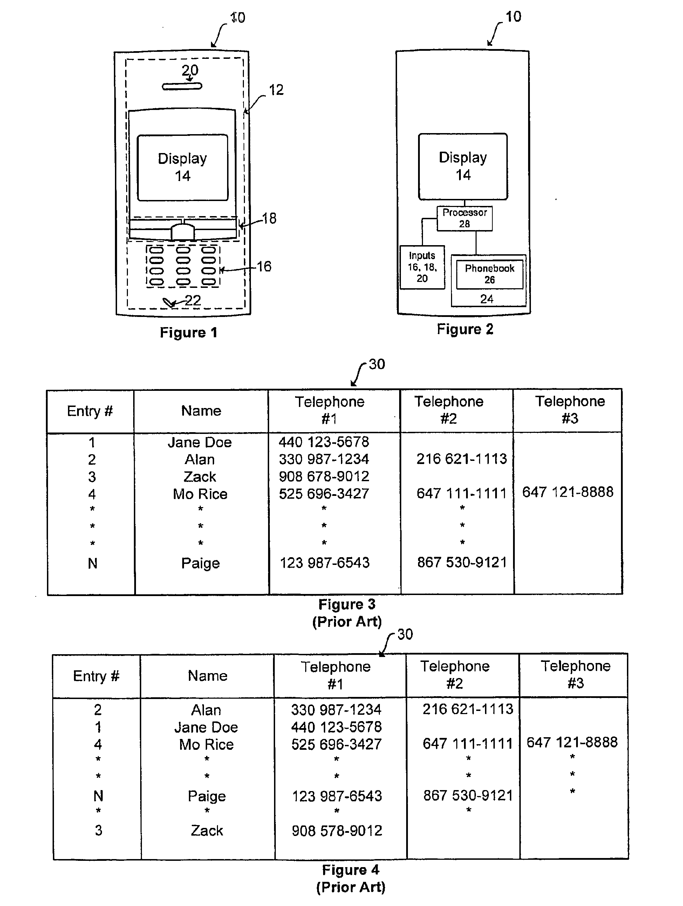

The present invention is directed to electronic equipment 10, sometimes referred to herein as a communication device, having an improved phonebook application for rating electronic phonebook entries (e.g., contacts). In addition, the present invention provides additional functionality over conventional electronic phonebooks based upon the rating associated with the electronic phonebook entry. As illustrated in Figure 1, the electronic equipment 10 may include a user interface 12 that enables the user easily and efficiently to perform one or more communication tasks (e.g., identify a contact, select a contact, make a telephone call, receive a telephone call, look up a telephone number, etc). The user interface 12 of the electronic equipment 10 generally includes one or more of the following components: a display 14, an alphanumeric keypad 16, function keys 18, a speaker 20, and a microphone 22.

As shown in Figure 2, the electronic equipment 10 further includes one or more storage devices 24 (e.g., RAM, ROM, etc.) capable of storing application software, including an electronic phonebook application 26. The phonebook 26 is generally coupled to a processor 28. The processor 28 is programmed to perform the functionality described herein, including rating and ordering contacts listed in the electronic phonebook. The processor 28 also is coupled with conventional input devices (e.g., alphanumeric keypad 16, function keys 18, microphone 22, etc.), and to the device display 20. The user interface 12 facilitates controlling operation of the electronic equipment 10 including initiating and conducting telephone calls and other communications. The user interface 12 is also one mechanism for the user or operator of the electronic equipment 10 to manipulate the electronic phonebook application 26.

A conventional phonebook 30 can accommodate a plurality of contacts, with each of the contacts including a variety of fields. For example as shown in Figures 3 and 4, the conventional phonebook 30 includes a plurality of contacts, with each contacts associated with one or more of the following fields, for example: entry number, name, and one or more telephone numbers, ring tones, pictures, e-mail addresses, home address and the like. Mobile phone users routinely make use of the phonebook function for convenience. As discussed above, conventional phonebooks are limited in organizing and displaying the contact information contained in the conventional phonebook 30. Typically, the contacts are organized and displayed based on when the contact information was entered into the phonebook, as shown in Figure 3, or organized in alphabetical order based on name, as shown in Figure 4.

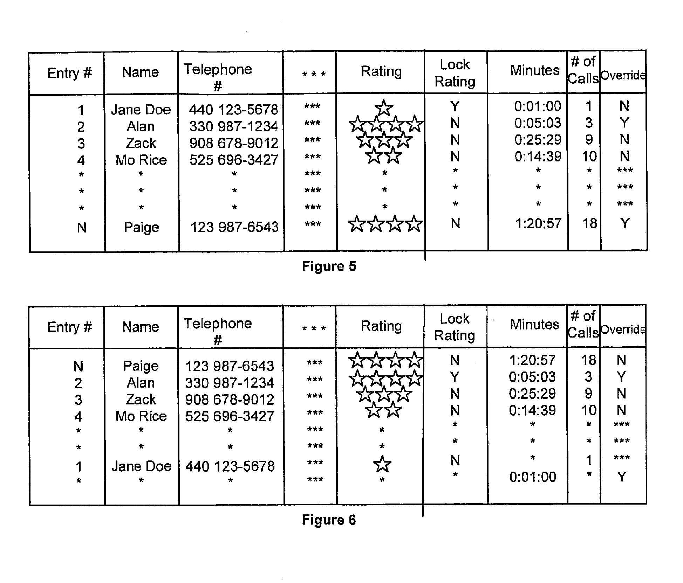

An exemplary electronic phonebook 50 in accordance with one aspect of the present invention is shown in Figure 5. The electronic phonebook 50, as illustrated in Figure 5, is shown organized in a conventional manner based on entry number. The electronic phonebook 50 generally includes all of the fields contained in the conventional phonebook 30 (e.g., entry number, name, and one or more telephone numbers, ring tones, pictures, e-mail addresses, home address and the like).

In addition to the conventional fields, one or more of the following additional fields may be maintained for rating and/or ranking individual contacts listed in the electronic phonebook 50: "Rating", "Minutes", "No. of Calls" (number of calls to and from a particular contact), and/or "Lock Rating". The "Rating" field may be set manually or may be determined automatically by one or more algorithms and/or methods described below. The "Minutes" field may maintain the cumulative connection time between the electronic equipment 10 and a particular contact for a period of time. The "No. of Calls" field may correspond to the total number of calls, text messages or the like sent to and/or received by a particular contact for a period of time. The "Lock Rating" field may prevent the contact from being subject to dynamic re-ordering based on the ranking corresponding with the contact. One of ordinary skill will readily appreciate that additional fields may be added to the exemplary phonebook 50 illustrated in Figure 5 depending on the type of information desired to rate and/or rank a particular contact. For instance, it may be preferable to track only the number of calls and/or cumulated time of calls and/or messages initiated by the electronic equipment 10, instead of tracking of the total connection time (incoming and outgoing calls and/or messages) between the user of electronic equipment 10 and a particular contact.

Figure 6 illustrates an embodiment of the present invention, wherein the contacts are ordered (or ranked) based upon the "Rating" field. The "Rating" field may take any form. For example, the rating may be a number in the range of 0 to 10; with 10 being the highest rated contact and 0, the lowest rated contact. The rating may include alphabet characters A-Z; with A being the highest rated contact and Z being the lowest rated contact. Likewise, the rating system may include symbols, (e.g., a one to four star rating system, with four stars being the highest rated contact, and 0 or 1 star being the lowest rated contact). As shown in Figure 5, the entries associated with "Paige" and "Alan" have four star ratings; "Zack" has a three star rating; "Mo Rice" has a two star rating; and the entry associated with "Jane Doe" has a one star rating. In cases where multiple contacts have the same rating, it may be desirable to rank such contacts based upon one or more of the following parameters: number of total messages, number of calls initiated, alphabetical order by name and/or any combination of operational parameters. As described in detail below, one aspect of the present invention is to allow the user manually to select a rating for a particular contact or group of contacts. For example, see the entry related to "Alan", which is rated as a four star rating even though the connection minutes and number of calls is fewer than other contacts (or entries) having a lower rating.

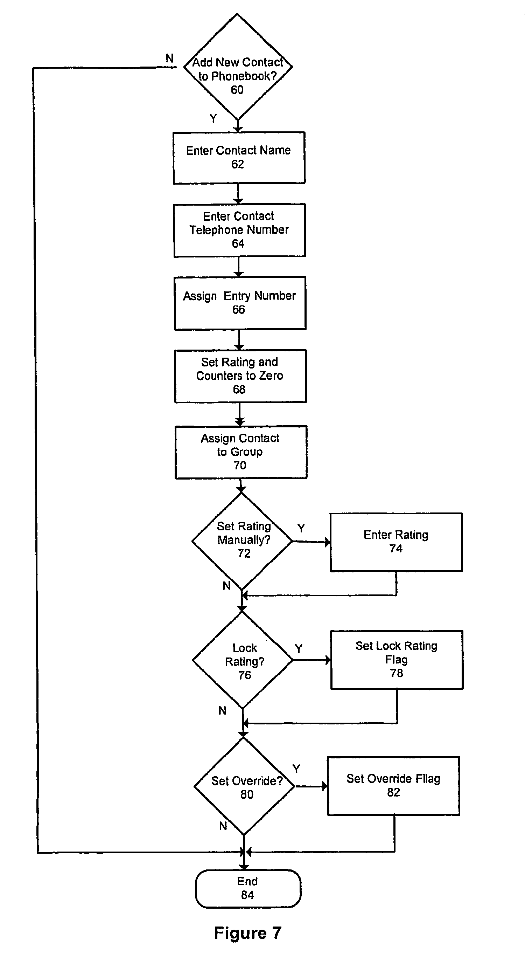

Figure 7 illustrates an exemplary method for inputting a new contact into the electronic phonebook 50. One of ordinary skill in the art will readily appreciate that there are many ways for inputting contacts into an electronic phonebook (e.g., manually, synchronization with a computer software application, by receiving a call from the contact, etc.). Likewise, one of ordinary skill in the art will appreciate that there are a variety of ways for entering information or otherwise making user input known to the electronic phonebook 50 and/or electronic equipment 10. For example, the display 14 may display information to the user and the user may select one or more keys of the alphanumeric keypad 16 and/or function keys 18 to enter data or make a selection.

In one exemplary embodiment, at step 60, the user is queried as to whether the user desires to enter a new contact to the phonebook. If the user does not wish to enter any additional contacts into the electronic phonebook 50, data flow proceeds to block 84 to end the subroutine. Otherwise, data flow proceeds to step 62 and the user may be prompted to enter the contact name. In one embodiment, the user may be prompted to enter the first and last name of the individual contact. The user then may be prompted to enter the telephone number for the contact at step 62.

An entry number then may be assigned to the entry at step 66. The entry number generally is assigned sequentially based on the number of contacts entered into the phonebook 50. The entry number may be assigned automatically based on hardware or software or the entry number may be assigned manually. At step 68, one or more counters associated with the ranking variables (e.g., ranking fields such as "Rating", "Minutes", "No. of Calls", etc.) may be set to zero. For example, counters associated with the No. of Calls (number of calls) received/transmitted, Call Minutes, etc., may be set to zero in order to track communications between the contact and the electronic equipment 10.

At step 70, the user may assign the contact to a group. Typical groups include, for example: family, business, personal, clients, customized fields, etc. If the user does not desire to assign the contact to a particular group, the contact may be assigned to a default group. At steps 72 and 74, the user may manually assign a rating to the contact. As described above, the rating system used for a particular electronic phonebook 50 may take any form. If the user desires not to subject a particular entry to dynamic re-ordering, the user may lock the rating at step 76, meaning that rating is locked to whatever rating it is set for the contact at the time the rating is locked. The user can lock the rating during this process or at a later time when the user so desires. In one embodiment, such functionality is provided by setting a Lock Rating flag in the "Lock Rating" field associated with the particular contact. For example, see the "Lock Rating" field associated with "Mike Abe" in Figure 6. This feature allows the user to "lock" the rating of certain entries such as the user's home telephone number, a spouse's telephone number, work telephone numbers and the like so that the order of the ratings associated with these entries in the electronic phonebook 50 is never changed.

At step 80, the user is provided the option of assigning an override function to the contact and step 82 allows the user to assign an override function. The override function allows a user to allow certain activity from one or more contacts to override particular settings (e.g., user selected and/or general call processing defaults) of the electronic equipment 10. For example, if the user manually sets the ringer of the electronic equipment 10 to silent because the user does not want to be interrupted in a particular instance, every call received by the electronic equipment (e.g., communication device, mobile telephone and the like) will be answered in the silent mode. However, if the contact has the appropriate override setting, the received call may be handled by the electronic equipment 10 in such a way as to override the user selected feature. For example, in the case where the ringer is set to silent, a call from "Mike Abe", who has an appropriate override setting (e.g., "Y" in the case of "Mike Abe" as shown in Figures 5 and 6), will override the particular default and act as desired by the user in such instances.

Steps 60-84 shown in Figure 7 may be repeated for each phone number and/or contact that the user wishes to save in the electronic phonebook 50. As illustrated in Figures 5 and 6, this results in the creation and storage of a plurality of phonebook records (contacts) in the electronic phonebook, each containing an entry number, name, phone number, various call counters, an indication of whether the entry can be re-ordered, and an indication of whether the entry may have override privileges.

The user may add to the phonebook at any time by repeating the steps in Figure 7. The entered contact information, including name, telephone number, assigned entry number, call counters, and indicators are then stored as a phonebook record in the memory 24, as shown in Figure 2.

Once the electronic phonebook 50 is populated with a plurality of contacts, the electronic phonebook 50 is capable of automatically setting the rating for all or a portion of the contacts contained therein. As discussed above, ratings may be automatically determined based one or more of the following criterion: connected cumulative minutes of all calls with a particular contact, connected cumulative minutes of calls initiated by the user, total number of calls (voice, text and the like) with a particular contact (e.g., initiated calls as well as received calls, etc.). The ratings may also be based on a combination of parameters. For examples, the contacts may be ranked based according to the following scale: 30% of the rank is based on the connected cumulative minutes of all calls with a particular contact and 70% of the rank is based on the number of calls to and/or calls received by a particular contact (e.g., the total number of calls connected to particular contact. In another example, the rank may be assigned accordingly: 80% based on the connected cumulative minutes of calls initiated by the user and 20% on the number of messages sent to and/or received by a particular contact. The top 20^{th} percentile of contacts may be assigned four stars; the second 20^{th} percentile may be assigned three stars; the third 20^{th} percentile may be assigned two stars; the fourth 20^{th} percentile may be assigned one star; and the bottom 20^{th} percentile may be assigned no stars. In another example, the rank may be based from 0 to 100% on any one or combination of parameters set forth above (e.g., number of calls with a particular contact, number of calls initiated to the contact, number of minutes connected to the contact, etc.). One of ordinary skill in the art will readily appreciate that there are a number of ways to rank (or order) contacts according to the present invention.

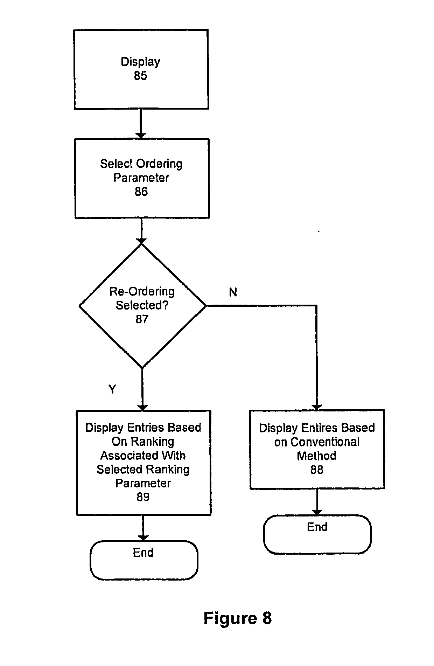

The user may at any time select the manner to display the records associated with the contacts in the electronic phonebook 50. As illustrated in Figure 8, at step 85, typically the user will utilize one or more components of the user interface 12 (e.g., display 14, alphanumeric keypad 16, function keys 18) to make a particular selection. At step 86, the processor 28 may prompt the user to select whether the user wishes to display the entries according to a particular rating parameter (e.g., "Rating", "Minutes", "No. of Calls", etc.) or any combination thereof or according to conventional ordering of the contacts (e.g., by entry numbers or alphabetically). This prompt may occur after a phonebook initially has been set up or at other times as a matter of design choice. Step 87 then determines whether dynamic ordering was selected. If the answer is "no", the processor 28 continues to display the entries according to the entry number in a conventional manner as depicted in step 88. If the answer is "yes", the processor 28 displays the entries according to the ranking parameter selected as depicted in step 89. At any time, the user may repeat the steps illustrated in Figure 8 to change the manner in which the contacts are displayed in the electronic phonebook 50. As set forth above in reference to Figure 7, certain contacts that have been flagged to prevent re-ordering will be excluded from a rating recalculation, but will be displayed with the re-ordered entries based upon the relative ratings.

From time to time, the user may wish to reset one or more of the ranking variable (e.g., call counters) associated with the contacts listed in the electronic phonebook 50. One such reason may be to account for changed circumstances. For example, if the user moves to a new city or changes jobs, and therefore begins to make and receive calls more or less frequently to one or more contacts, the user may wish to reset the call counters. In one embodiment, the processor 28 resets one or more of the fields associated with the rating parameters to zero when requested. Such procedure can be applied to all contacts, groups of contacts and/or individual contacts as desired by the user.

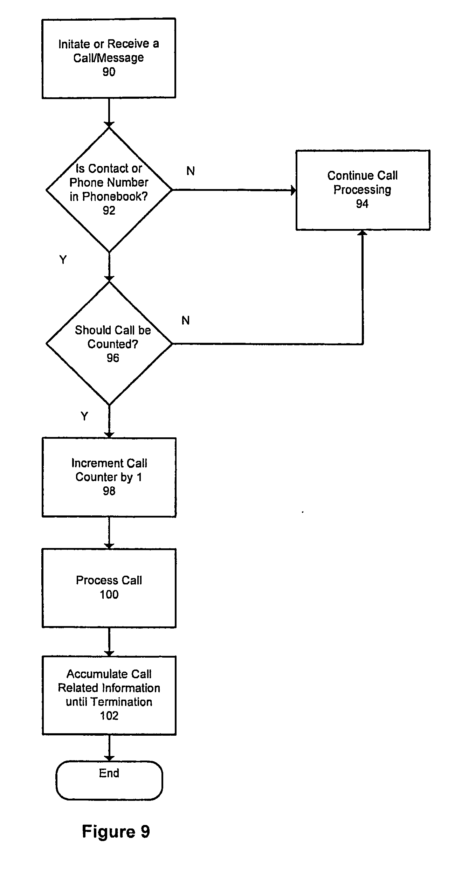

Figure 9 generally illustrates the steps performed by the processor 28 to accumulate ranking information for the dynamic ordering process. The user first initiates or receives a call or message (e.g., voice, text, and like) in a conventional manner as depicted in step 90. The processor 28 then determines if the originating phone number or contact is in the electronic phonebook 50, as depicted by step 92. If the originating phone number and/or contact are not in the electronic phonebook 50, the processor 28 directs the electronic equipment 10 to process the call in a conventional manner and by-passes the further dynamic ordering steps depicted in Figure 9.

If the answer to step 92 is "yes", the processor 28 determines whether the call should be counted as depicted in step 96. For example, if the user selected only to count outgoing calls in step 92 and the current call is an incoming call, the answer to step 96 would be "no". The processor 28 then would direct the electronic equipment 10 to continue conventional call processing as depicted in step 94.

If the answer to step 96 is "yes", the processor 28 increments the call counter associated with the contact phone number (e.g., the "No. of Calls" field in Figure 5) in the electronic phonebook 50 by 1 as depicted in step 98. At Step 100 the call is processed in a predetermined manner based on the contact rating, in a user defined matter, etc. Additional information associated with the call, for example, the amount of time connected and the like also is accumulated and is appropriately stored as depicted in step 102. As stated above, time connected information may be stored in the "Minutes" field as depicted in Figures 5 and 6 and/or call information may also be tracked on the basis of whether the call is outgoing or incoming. The processor 28 continuously updates the call counter for each phonebook record in this manner and stores the information in the electronic phonebook 50 or other desired memory device (e.g., storage medium 24). For example, Figure 6 shows that the telephone number corresponding to the highest ranked item has a call counter value (e.g., "# of Calls" field value of 18, which corresponds to 18 calls and/or messages either made to and/or received from the phone number "123-987-6543").

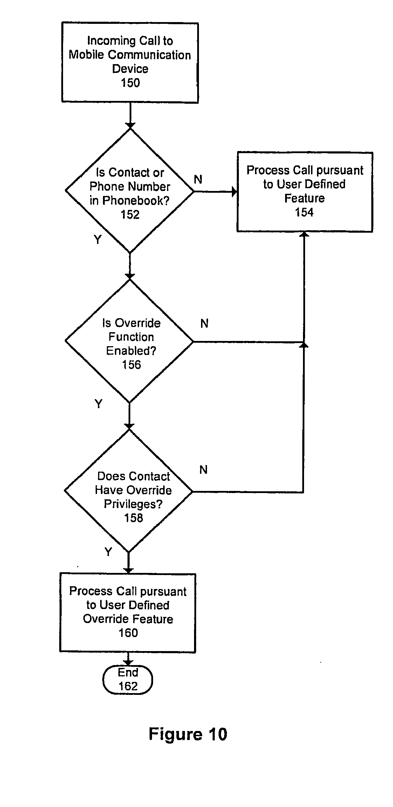

Figure 10 illustrates another aspect of the present invention relating to an override function. As explained above, the override function allows an individual contact or a group of contacts to override a user selected feature. For example, if the user manually sets the ringer of the telephone to silent because the user does not want to be interrupted in a particular instance, every call received by the electronic equipment will be answered in the silent mode. Likewise, if the user does not want to speak to a particular contact, the user could set an override function for the call automatically to go to voice mail, instead of being handled in the same manner as other calls are handled.

One exemplary method for implementing the override function is illustrated in Figure 10. At step 150, the user receives a call or message (e.g., voice, text, and like) in a conventional manner. The processor 28 then determines if the originating phone number or contact is in the electronic phonebook 50, as depicted by step 152. If the originating phone number and/or contact are not found in the electronic phonebook 50, the processor 28 directs the electronic equipment 10 to process the call in the user-selected manner and by-passes the further override function steps depicted in Figure 10.

If the answer to step 152 is "yes", the processor 28 determines whether the user has disabled the override function, as set forth in 156. In some instances, the user may desire not to be interrupted at all regardless of the contact. Accordingly, the user interface 12 will allow the user to disable receiving all calls, regardless of whether the calling contact has override privileges. In such instances, the call will be processed in the user-selected manner, as shown in step 154. If the override function is enabled, the processor 28 determines if the calling contact has override privileges, as shown in step 158. If the contact does not have override privileges, the processor 28 directs the electronic equipment 10 to process the call in the user-selected manner, as depicted in step 154. Otherwise, the call is processed pursuant to the user defined override feature. One of ordinary skill in the art will readily appreciate that there are a number of override functions that may be desirable for any given user and/or situation.

Specific embodiments of an invention are disclosed herein. One of ordinary skill in the art will readily recognize that the invention may have other applications in other environments. In fact, many embodiments and implementations are possible. The following claims are in no way intended to limit the scope of the present invention to the specific embodiments described above. In addition, any recitation of "means for" is intended to evoke a means-plus-function reading of an element and a claim, whereas, any elements that do not specifically use the recitation "means for", are not intended to be read as means-plus-function elements, even if the claim otherwise includes the word "means". It should also be noted that although the specification lists method steps occurring in a particular order, these steps may be executed in any order, or at the same time.

Computer program elements of the invention may be embodied in hardware and/or in software (including firmware, resident software, micro-code, etc.). The invention may take the form of a computer program product, which can be embodied by a computer-usable or computer-readable storage medium having computer-usable or computer-readable program instructions, "code" or a "computer program" embodied in the medium for use by or in connection with the instruction execution system. In the context of this document, a computer-usable or computer-readable medium may be any medium that can contain, store, communicate, propagate, or transport the program for use by or in connection with the instruction execution system, apparatus, or device. The computer-usable or computer-readable medium may be, for example but not limited to, an electronic, magnetic, optical, electromagnetic, infrared, or semiconductor system, apparatus, device, or propagation medium such as the Internet. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner. The computer program product and any software and hardware described herein form the various means for carrying out the functions of the invention in the example embodiments.

## Claims

1. An electronic equipment comprising:
an electronic phonebook application (26) stored in a memory (24), wherein the phonebook application includes a plurality of contacts having a plurality of entries including a contact rating field;
a processor (28) coupled to the memory, wherein the processor (28) is adapted to calculate at least one contact rating for one or more of the plurality of contacts based on a number of calls connected to the particular contact and on a cumulative time connected to the particular contact; and
a display (14) coupled to the processor (28) for displaying one or more of the contacts based upon the contact rating.

2. The electronic equipment of claims 1, further including at least one contact rating manually assigned by an associated user.

3. The electronic equipment of claim 2 further including at least one user selected setting that allows an associated call from one or more contacts to override a call processing function.

4. The electronic equipment of claim 3, further including a bypass mechanism for bypassing the user selected setting in order to prevent the general call processing behavior to be bypassed.

5. The electronic equipment of claim 1, wherein at least one of the plurality of entries includes a field for a number of calls connected to the particular contact.

6. The electronic equipment of claim 5, wherein at least one of the plurality of the entries also includes a field for a cumulative time connected to the particular contact.

7. The electronic equipment of claim 1, wherein 70% of the contact rating is based on the number of calls connected to the particular contact.

8. The electronic equipment of claim 7, wherein 30% of the contact rating is based on the cumulative time connected to the particular contact.

9. A computer program stored on a machine readable medium, the program being suitable for use in an electronic equipment (10) as an electronic phonebook application (26) including a plurality of contacts having a plurality of entries including a cumulative time connected to the particular contact and a total number of calls connected to the particular contact, wherein:
when the program is loaded in memory in the electronic equipment (10) and executed causes the electronic equipment (10) to calculate a contact rating for one or more of the plurality of contacts based on the cumulative time connected and the total number of calls connected to the particular contact.

## Patentansprüche

1. Elektronische Ausrüstung, umfassend:
eine elektronische Telefonbuch-Anwendung (26) die in einem Speicher (24) gespeichert ist, wobei die Telefonbuch-Anwendung eine Vielzahl von Kontakten umfasst, die eine Vielzahl von Einträgen aufweisen, umfassend ein Kontaktbewertungsfeld;
einen Prozessor (28), der an den Speicher gekoppelt ist, wobei der Prozessor (28) angepasst ist, wenigstens eine Kontaktbewertung für einen oder mehr aus der Vielzahl an Kontakten zu berechnen, basierend auf einer Zahl von Anrufen, verbunden mit dem bestimmten Kontakt, und auf einer kumulativen Zeit, verbunden mit dem bestimmten Kontakt; und
eine Anzeige (14), die an den Prozessor (28) gekoppelt ist, um einen oder mehr der Kontakte basierend auf der Kontaktbewertung anzuzeigen.

2. Elektronische Ausrüstung nach Anspruch 1, ferner umfassend wenigstens eine Kontaktbewertung, die manuell durch einen zugehörigen Benutzer zugewiesen wird.

3. Elektronische Ausrüstung nach Anspruch 2, ferner umfassend wenigstens eine von einem Benutzer gewählte Einstellung, die es einem zugehörigen Anruf von einem oder mehr Kontakten erlaubt, sich über eine Anrufsverarbeitungsfunktion hinwegzusetzen.

4. Elektronische Ausrüstung nach Anspruch 3, ferner umfassend einen Umgehungs-Mechanismus, um die von einem Benutzer gewählte Einstellung zu umgehen, um zu Verhindern, dass das generelle Anrufsverarbeitungsverhalten umgangen wird.

5. Elektronische Ausrüstung nach Anspruch 1, wobei wenigstens einer aus der Vielzahl an Einträgen ein Feld für eine Zahl von Anrufen umfasst, verbunden mit dem bestimmten Kontakt.

6. Elektronische Ausrüstung nach Anspruch 5, wobei wenigstens einer aus der Vielzahl von Einträgen auch ein Feld umfasst für eine kumulative Zeit, verbunden mit dem bestimmten Kontakt.

7. Elektronische Ausrüstung nach Anspruch 1, wobei 70% der Kontaktbewertung auf der Zahl von Anrufen, verbunden mit dem bestimmten Kontakt, basiert.

8. Elektronische Ausrüstung nach Anspruch 7, wobei 30% der Kontaktbewertung auf der kumulativen Zeit verbunden mit dem bestimmten Kontakt basiert.

9. Computerprogramm, das auf einem Maschinen-lesbaren Medium gespeichert ist, wobei das Programm geeignet ist in einer elektronischen Ausrüstung (10) als eine elektronische Telefonbuchanwendung (26) genutzt zu werden, umfassend eine Vielzahl von Kontakten mit einer Vielzahl von Einträgen, die eine kumulative Zeit, verbunden mit dem bestimmten Kontakt, und eine gesamte Anzahl von Anrufen, verbunden mit dem bestimmten Kontakt, umfassen, wobei:
wenn das Programm in dem Speicher der elektronischen Ausrüstung (10) geladen ist und ausgeführt wird bewirkt, dass die elektronische Ausrüstung (10) eine Kontaktbewertung für einen oder mehr aus der Vielzahl von Kontakten berechnet basierend auf der kumulativen Zeit verbunden und der gesamten Zahl von Anrufen verbunden mit dem bestimmten Kontakt.

## Revendications

1. Équipement électronique comprenant :
une application d'annuaire téléphonique électronique (26) stockée dans une mémoire (24), dans lequel l'application d'annuaire téléphonique comprend une pluralité de contacts, avec une pluralité d'enregistrements comprenant une zone de classement de contacts ;
un processeur (28) couplé à la mémoire, dans lequel le processeur (28) est conçu pour calculer au moins un classement de contacts pour un ou plusieurs contacts parmi la pluralité de contacts, sur la base d'un nombre d'appels connectés avec le contact particulier et d'un temps de connexion cumulé avec le contact particulier ; et
un écran d'affichage (14) couplé au processeur (28) et destiné à afficher un ou plusieurs des contacts sur la base d'un classement des contacts.

2. Équipement électronique selon la revendication 1, comprenant en outre au moins un classement de contacts attribué manuellement par un utilisateur associé.

3. Équipement électronique selon la revendication 2, comprenant en outre au moins un paramètre sélectionné par l'utilisateur qui permet à un appel associé provenant d'un ou plusieurs contacts de court-circuiter une fonction de traitement des appels.

4. Équipement électronique selon la revendication 3, comprenant en outre un mécanisme de court-circuit destiné à court-circuiter le paramètre sélectionné par l'utilisateur, afin d'empêcher que le comportement général de traitement des appels ne soit court-circuité.

5. Équipement électronique selon la revendication 1, dans lequel au moins un enregistrement, dans la pluralité d'enregistrements, comprend une zone pour un nombre d'appels connectés avec le contact particulier.

6. Équipement électronique selon la revendication 5, dans lequel au moins un enregistrement, dans la pluralité d'enregistrements, comprend également une zone pour un temps cumulé de connexion avec le contact particulier.

7. Équipement électronique selon la revendication 1, dans lequel 70 % du classement des contacts sont fondés sur le nombre des appels connectés avec le contact particulier.

8. Équipement électronique selon la revendication 7, dans 30 % du classement des contacts sont fondés sur le temps cumulé de connexion avec le contact particulier.

9. Programme d'ordinateur stocké sur un support lisible par la machine, le programme étant conçu pour être utilisé dans un équipement électronique (10) sous la forme d'une application d'annuaire téléphonique électronique (26) comprenant une pluralité de contacts ayant une pluralité d'enregistrements comprenant un temps cumulé de connexion avec un contact particulier et un nombre total d'appels connectés avec le contact particulier,
dans lequel, lorsque le programme est chargé dans la mémoire de l'équipement électronique (10) et exécuté, il commande à l'équipement électronique (10) de calculer un classement de contacts pour un ou plusieurs contacts parmi la pluralité de contacts, sur la base du temps cumulé de connexion et du nombre total des appels connectés avec le contact particulier.
